# EUROPÄISCHE PATENTANMELDUNG

(11) **EP 1 149 753 A2**
(43) Veröffentlichungstag der Anmeldung: **31.10.2001**
(21) Anmeldenummer: 01110229.0
(22) Anmeldetag: 25.04.2001
(51) Int. Cl.: B62B 3/04

(54) **Transportroller**

(30) Priorität: 27.04.2000 DE 10020587
(71) Anmelder: Schoeller Wavin Systems Services GmbH, 82041 Oberhaching (DE)
(72) Erfinder: Barth, Christian, 81479 München (DE); Kellerer, Richard, 81243 München (DE); Brunsmann, Jochen, 81477 München (DE)
(74) Vertreter: Bockhorni, Josef, Dipl.-Ing.

(57) **Zusammenfassung**

Transportroller zum Transport und zur Lagerung von Kisten, Getränkekästen, Verpackungs- und Displaykartons und dergleichen mit einer Plattform (2) mit Transportfläche (6) und auf der Unterseite der Plattform angeordneten Rädern (3) wobei die Plattform und die Räder im wesentlichen vollständig aus Kunststoff gefertigt sind und/oder die Transportfläche mit einer Vielzahl von Befestigungs- und Anordnungselementen (7,8,9,10,11,12,19) zur variablen Aufnahme einer Vielzahl unterschiedlicher Kisten, Kästen, Kartons und dergleichen multifunktional gestaltet ist.

## Beschreibung

Die vorliegende Erfindung betrifft einen Transportroller zur Lagerung und zum Transport von Kisten, Getränkekästen, Transport- und Verkaufskartons oder ähnlichem.

Transportroller, oft auch als Dolly bezeichnet, die in einer einfachsten Ausführungsform aus einer Plattform und unter dieser Plattform angeordneten Rädern bestehen, gibt es bereits in einer Vielzahl von Ausführungen, um unterschiedliche Gegenstände, wie z.B. Transportkisten, Getränkekästen und Verpackungskartons zu transportieren. Dabei wird das zu transportierende Gut lediglich auf einer Plattform abgestellt, die durch die unter ihr angebrachten Räder fahrbar ist. Da die Plattform der Transportroller meist derart mit Rädern versehen ist, daß die Plattform nur knapp oberhalb des Bodens liegt, können auf einem derartigen Transportroller üblicherweise die zu befördernden Kisten gestapelt werden und der Transportroller wird dann aufgrund der Reibungskraft zwischen der Plattform und dem darauf gestapelten Gut durch Verschieben und Führen des Stapels verfahren und gelenkt.

Allerdings ergibt sich bei einer derartigen Vorgehensweise das Problem, daß bei einem zu geringen Halt des auf dem Transportroller gestapelten Guts, d.h. zu geringer Reibungskraft zwischen der Plattform des Transportrollers und dem darauf gestapelten Gut, ein Verrutschen oder gar Herabfallen der Ladung während des Transports möglich ist. Dies ist insbesondere immer dann der Fall, wenn beispielsweise durch Unebenheiten am Boden ein besonderer Widerstand gegenüber dem Verfahren des Transportrollers auftritt. Verstärkt wird dieses Problem noch durch stoßartiges Auftreten des Rollwiderstandes, wie dies z.B. beim Überfahren von Türschwellen oder ähnlichem stattfinden kann. Außerdem ist bei derartigen Transportrollern auch das Fahren um Kurven kritisch, da auch hier leicht ein Abrutschen des gestapelten Guts von der Plattform auftreten kann.

Um diesem Problem zu begegnen, sind bereits Transportroller bekannt, bei denen die Oberfläche der Plattform, auf denen das zu transportierende Gut gestapelt werden soll, einen umlaufenden Rand aufweist, so daß ein seitliches Verschieben des Stapelguts über den Rand hinaus verhindert wird. Diese Transportroller weisen jedoch den Nachteil auf, daß Transportkisten oder Getränkekästen mit unterschiedlichen Ausmaßen, die von der Plattform mit dem umlaufenden Rand abweichen, nur schlecht transportiert werden können, d.h. unter Inkaufnahme der oben geschilderten Probleme.

Weiterhin ist es bei den derzeit bekannten Transportrollern üblich, sie aus metallischen Werkstoffen herzustellen und zwar insbesondere die Lagerböcke, in denen die Räder aufgenommen sind, und die Lager der Räder, da die Räder durch die meist hohen zu tragenden Lasten und stoßartigen Beanspruchungen, z.B. beim Überfahren von Türschwellen, beim Zusammenstoßen mit Hubwägen und dergleichen oder beim Leertransport, starken Belastungen ausgesetzt sind.

Deshalb werden für die bekannten Transportroller auch ausschließlich Kugellager aus metallischen Werkstoffen für die Räder verwendet, die für diese Belastungen ausgelegt sind. Nachteilig ist bei dieser metallischen Ausführung der Transportroller, daß insbesondere bei einer Ausführung, bei der der Transportroller insgesamt im wesentlichen aus metallischen Werkstoffen gefertigt wird, dieser ein hohes Gewicht aufweist, und aufwendig in der Herstellung ist. Die Verwendung von metallischen Kugellagern weist den Nachteil auf, daß diese Lager einer Schmierung bedürfen, so daß nach einer Reinigung des Transportrollers die Schmierung der Kugellager überprüft und eventuell wieder erneuert werden muß.

Aufgabe der vorliegenden Erfindung ist es deshalb, einen Transportroller bereitzustellen, der zum einen einen sicheren, gefahrlosen und bequemen Transport von Gegenständen, insbesondere Kisten, Getränkekästen oder dergleichen gewährleisten soll und zum anderen einfach und kostengünstig bei der Herstellung und beim Betrieb sein soll. Insbesondere soll der Transportroller auch für zusätzliche Aufgaben herangezogen werden, die über einen einfachen Transportzweck hinausgehen, z.B. zur Lagerung von Gegenständen zu Verkaufszwekken. Hier ist insbesondere auch daran gedacht, einen universell einsetzbaren Transportroller bereitzustellen, der in der gesamten Kette des Transportzyklusses von Gegenständen, wie z.B. Gemüsekisten, eingesetzt werden kann, d.h. beim Transport vom Erzeuger zur Verkaufsstelle, während des Anbietens beim Verkäufer, bei der Reinigung der Transportkisten oder dergleichen und beim Rücktransport des Leergutes. Darüber hinaus soll der Transportroller auch einfach zu entsorgen und universell für alle möglichen zu transportierenden Gegenstände eingesetzt werden können.

Diese Aufgabe wird gelöst mit einem nachfolgend beschriebenen Transportroller, insbesondere einem, wie er in den Ansprüchen definiert ist.

Der erfindungsgemäße Transportroller umfaßt eine Plattform mit Transportfläche, und mindestens drei, vorzugsweise vier an der Unterseite der Plattform angeordneten Transporträdern, die jeweils aus einem Lagerbock und darin aufgenommenen Rollen bestehen, wobei der Lagerbock die Verbindung zwischen Plattform und Rollen bereitstellt. Die Rollen sind in den Lagerböcken über Gleitlager aufgenommen, so daß sie sich gegenüber den Lagerböcken drehen können. Alle diese wesentlichen Elemente des erfindungsgemäßen Transportrollers, nämlich Plattform, Lagerbock, Rollen und Gleitlager sind aus Kunststoff gefertigt. Hierfür kommen insbesondere Kunststoffe der Gruppe der Polyolefine, insbesondere Polypropylen und Polyamid infrage.

Die im wesentlichen vollständige Herstellung des Transportrollers aus Kunststoff hat den Vorteil, daß der Transportroller ein sehr geringes Gewicht bei ausreichender Stabilität aufweist. Außerdem bietet die Fertigung aus Kunststoff Vorteile bei der Herstellung, da diese Teile in einfacher Weise durch Spritzguß hergestellt werden können und über einfache Rast- bzw. Schnapp- und Klemmverbindungen einfach miteinander verbindbar sind.

Neben dem Vorteil des niedrigen Gewichts kommt der im wesentlichen vollständigen Fertigung aus Kunststoff weiterhin der Vorteil zu, daß Kunststoff-Gleitlager verwendet werden können, die für den Einsatz bei Transportrollern besondere Vorteile aufweisen. Hier ist zum einen zu nennen, daß die Gleitlager eine im Vergleich sehr viel höhere Haftreibung als Gleitreibung aufweisen. Dies bedeutet, daß zunächst ein höherer Kraftaufwand erforderlich ist, um die Haftreibung zu überwinden, also um den Transportroller aus dem Stand in Bewegung zu versetzen. Anschließend, wenn der Transportroller einmal in Bewegung ist, ist die Gleitreibung nicht mehr so hoch, so daß kein besonders hoher Kraftaufwand erforderlich ist. Dies hat den Vorteil, daß auf Bremsen an den Rädern weitgehend verzichtet werden kann, da bei kleinen Neigungen der Transportroller durch die Haftreibung der Kunststoff-Gleitlager gehalten wird. Zusätzlich können natürlich für größere Neigungen oder zur Sicherheit Feststellbremsen vorgesehen sein. Diese müssen jedoch nicht immer bedient werden, um ein sicheres Stehen des Transportrollers auf einer leicht abschüssigen Fläche zu ermöglichen. So ist hier, auch wenn nicht auf Feststellbremsen verzichtet wird, dennoch ein Vorteil bei der Bedienung des Transportrollers gegeben.

Ein weiterer Vorteil der durch die im wesentlichen vollständige Ausgestaltung des Transportrollers aus Kunststoff erzielt wird, ist darin zu sehen, daß der Transportroller einfach zu reinigen ist. Insbesondere für die Verwendung des Transportrollers im Lebensmittelbereich ist es vorteilhaft, wenn der Transportroller bei hohen Temperaturen gereinigt werden kann, so daß Sterilität erzielt wird. Dies ist insbesondere vorteilhaft, wenn der Transportroller auch im Produktionsbereich von Lebensmitteln eingesetzt werden soll. Im Gegensatz zu Transportrollern, die beispielsweise metallische Kugellager verwenden, ist eine Reinigung bei hohen Temperaturen mit Wasser für einen Transportroller, der fast vollständig aus Kunststoff gefertigt ist, unproblematisch, da der Kunststoff zum einen nicht anfällig für Korrosion ist und zum anderen Kunststoff-Gleitlager keiner zusätzlichen Schmierung bedürfen.

Ein weiterer Vorteil einer Vollkunststoffausführung ist darin zu sehen, daß auch das Recycling des Transportrollers vereinfacht wird, da keine unnötige oder aufwendige Trennung von verschiedenen Materialien anfällt.

Zusätzlich ist es bei einem Vollkunststoff-Transportroller vorteilhaft, daß das Kunststoffmaterial auch keine elektrischen oder magnetischen Eigenschaften aufweist, die störend für elektrische oder elektronische Geräte oder für Funkübertragungen sind. Da im Logistikbereich verstärkt sogenannte Transponder eingesetzt werden, die die Informationen über das zu transportierende Gut enthalten, und deren Information durch Funkübertragung abgefragt wird, ist es vorteilhaft, keine störenden metallischen Teile an dem Transportroller zu haben, der diese Übertragung störend beeinflussen könnte. Entsprechend ist es auch vorgesehen, bei einer bevorzugten Ausführungsform einen Transportroller bereitzustellen, der bereits einen entsprechenden Transponder aufweist.

Ein ganz besonderer Vorteil einer Vollkunststoff-Ausführung des Transportrollers, und insbesondere die Verwendung von Kunststoff-Gleitlagern, ist darin zu sehen, daß durch die Elastizität des Kunststoffes und die Unempfindlichkeit gegenüber größeren Toleranzen auf einfache Weise, d.h. ohne großen konstruktiven Aufwand, eine gewisse Federung des Transportrollers bereitgestellt wird, die dazu führt, daß das auf dem Transportroller gestapelte Gut nicht so leicht durch Stöße, z.B. beim Überfahren von Türschwellen, auf dem Transportroller verrutscht und von diesem herab fallen kann. Die verbesserte Federung eines Vollkunststoff-Transportrollers führt also auch dazu, daß die Sicherheit und Bedienbarkeit beim Transport von Gegenständen auf dem Transportroller verbessert wird.

Zu diesem Zweck weist ein erfindungsgemäßer Transportroller auch eine multifunktionale Transportfläche an der Oberseite der Plattform auf. Diese multifunktionale Transportfläche ist dadurch gekennzeichnet, daß durch eine Vielzahl unterschiedlicher Vertiefungen und/oder Erhöhungen, Schlitze und dergleichen Befestigungs- und Anordnungsmöglichkeiten für eine Vielzahl von unterschiedlichen Kisten, Kästen, Kartons und dergleichen bestehen.

So ist beispielsweise vorgesehen, durch mindestens zwei, vorzugsweise mehrere parallel zu den Seitenwänden der Plattform verlaufende Rillen oder Nuten Eingriffsmöglichkeiten für konische Transportkisten mit unterschiedlichen Abmessungen zu schaffen.

Weiterhin ist es vorteilhaft, den umlaufenden Stapelrand am Umfang der Transportfläche nicht durchgehend auszubilden, sondern lediglich in den Eckbereichen und in Abschnitten entlang der Seitenwände, so daß Kisten oder Kästen mit Stapelrand, die unterschiedliche Abmessungen aufweisen, sicher auf der Plattform gestapelt werden können.

Weiterhin ist es vorteilhaft, unterschiedliche Vertiefungen vorzusehen, insbesondere in den Eckbereichen der Transportfläche, so daß zu transportierende Gegenstände, die Füße oder Ansätze von Füßen aufweisen, hier Eingriffsmöglichkeiten finden.

Besonders vorteilhaft ist es, in der Transportfläche Schlitze vorzusehen, die sich vorzugsweise über die gesamte Dicke der Plattform erstrecken können, um durch diese Schlitze Befestigungsmöglichkeiten für das auf dem Transportroller gestapelte Gut bereitzustellen. So könnten beispielsweise in die Schlitze der Transportfläche Laschen von Verpackungskartons eingesteckt werden, die beispielsweise in der Form eines Widerhakens ausgeführt sind, so daß sie nach dem Einführen in die Schlitze nicht ohne entsprechende Anstrengungen aus den Schlitzen entnommen werden können. Alternativ können die Schlitze auch zur Anbringung von Bändern oder dergleichen vorgesehen werden.

Besonders vorteilhaft ist es auch, an den Seitenwänden der Plattform, die sich an die eigentliche Transportfläche anschließen, Befestigungsmittel, wie z.B. Führungen, Einstecklaschen oder dergleichen, insbesondere Schwalbenschwanzführungen, vorzusehen, an denen korrespondierende Befestigungsmittel der zu transportierenden Güter angeordnet werden können. Auf diese Weise ist es möglich, unterschiedlichste Gegenstände gesichert gegenüber Verrutschen und Herabfallen auf dem Transportroller zu stapeln.

Weiterhin ist es vorteilhaft, in der multifunktionalen Transportfläche Vertiefungen vorzusehen, die beim Übereinanderstapeln von Transportrollern die Räder eines darauf gestapelten Transportrollers aufnehmen, um so ein Wegrollen des Transportrollers auf der Transportfläche des darunter gestapelten Transportrollers zu verhindern. Vorzugsweise weist die Transportfläche vier derartige Vertiefungen auf, wobei zwei Vertiefungen durch eine quaderförmige Vertiefung mit rechteckigem Querschnitt und die beiden anderen Vertiefungen durch eine scheibenförmige Vertiefung mit kreisrunder Grundfläche gebildet werden. In die quaderförmigen Vertiefungen können hierbei die Räder der Transportroller aufgenommen werden, die nicht verschwenkbar an dem Transportroller angeordnet sind, während in den kreisrunden Vertiefungen verschwenkbare Räder aufgenommen werden, so daß beim Übereinanderstapeln eine Ausrichtung der verschwenkbaren Räder in Bezug auf die Vertiefungen nicht erforderlich ist.

Wie bereits oben angedeutet, sind bei einer bevorzugten Ausführungsform vier Räder an der Unterseite der Plattform des Transportrollers vorgesehen, wobei zwei Räder drehbar bzw. verschwenkbar in Bezug auf die Ausrichtung der Drehachse der Räder bezüglich der Plattform angeordnet sind, während die übrigen beiden Räder starr bezüglich der Ausrichtung ihrer Drehachse gegenüber der Plattform angebracht sind. Da zur Anordnung der Räder an der Plattform ein Lagerbock vorgesehen ist, in dem jeweils das Rad drehbar aufgenommen ist, wird die Drehbarkeit der Radachse in Bezug auf die Plattform durch eine drehbare Anordnung der Lagerböcke an der Unterseite der Plattform erzielt. Vorzugsweise werden die drehbar angeordneten Lagerböcke durch eine Schnapp- und Rastverbindung drehbar mit der Plattform verbunden.

Bei den starr angeordneten Lagerböcken ist es ebenfalls möglich, diese durch eine Schnapp- und/oder Rastverbindung mit der Plattform zu verbinden. Allerdings ist auch eine integrale Anformung der Lagerböcke an die Plattform möglich.

Bei einer Anordnung der Lagerböcke über Schnapp- und Rastverbindungen ist es besonders vorteilhaft, wenn die Lagerböcke durch einfaches Lösen der Schnappund Rastverbindung von der Plattform abnehmbar sind, so daß ein schnelles und unkompliziertes Wechseln der Räder möglich ist. Beispielsweise kann dies dadurch realisiert werden, daß in der Plattform Eingriffsöffnungen vorgesehen sind, durch die die Rastelemente, mit denen die Lagerböcke in der Plattform aufgenommen werden, durch elastisches Verformen gelöst werden können.

Die Rollen der Räder sind vorzugsweise mit den Gleitlagern über eine Klemmverbindung oder einen Preßsitz in den Lagerböcken angeordnet. Dies kann beispielsweise dadurch realisiert werden, daß die Rollen mit den Radnaben, um die die Lagerhülse des Gleitlagers angeordnet ist, in im wesentlichen U-förmige Ausnehmungen der Lagerböcke gepreßt werden, so daß die Lagerhülsen fest in diesen U-förmigen Ausnehmungen der Lagerböcke sitzen. Eine derartige Konstruktion weist den Vorteil auf, daß zum einen eine besonders einfache Herstellung möglich ist, und daß zum anderen auch ein einfaches Auswechseln der Rollen möglich ist, wenn der Lagerbock beispielsweise ausreichend elastisch verformbar ist.

Die Rollen der Räder weisen vorzugsweise in ihrer Lauffläche eine rillenartige Vertiefung auf. Diese dient dazu, daß die Transportroller auch auf einem Schienensystem z.B. in einem automatischen Transportsystem durch eine Waschanlage, verwendbar sind. Weiterhin kann eine derartige Rille herstellungstechnisch von Vorteil sein, wenn beispielsweise die Rollen aus zwei Hälften zusammengeschweißt werden. Hier kann die Schweißnaht in den Bereich der rillenartigen Vertiefung gelegt werden, so daß keine besonderen Anforderungen an die Schweißnaht bezüglich Genauigkeit, Ebenheit usw. gestellt werden müssen, um eine glatte Lauffläche zu erzielen.

Weitere Vorteile, Kennzeichen und Merkmale der vorliegenden Erfindung werden anhand der nachfolgend detaillierten Beschreibung von Ausführungsbeispielen gemäß der beigefügten Zeichnungen deutlich werden. Die Zeichnungen zeigen dabei in rein schematischer Weise in
- Figur 1: eine perspektivische Ansicht eines erfindungsgemäßen Transportrollers;
- Figur 2: eine Seitenansicht mit teilweiser Schnittansicht eines erfmdungsgemäßen Transportrollers;
- Figur 3: eine perspektivische Darstellung einer Plattform eines erfin dungsgemäßen Transportrollers;
- Figur 4: eine perspektivische Ansicht einer Plattform von unten;
- Figur 5a: und b eine Seitenansicht bzw. eine Frontansicht einer Rolle eines erfindungsgemäßen Transportrollers;
- Figur 6: einen Schnitt durch die Rolle aus Figur 5a;
- Figur 7: eine Schnittansicht einer Lagerbuchse;
- Figur 8: eine Schnittansicht durch eine Lagerscheibe;
- Figur 9: eine Seitenansicht eines Rads eines erfindungsgemäßen Transportrollers mit Lagerbock und Rolle; und in
- Figur 10: eine Schnittansicht durch das Rad aus Figur 9.

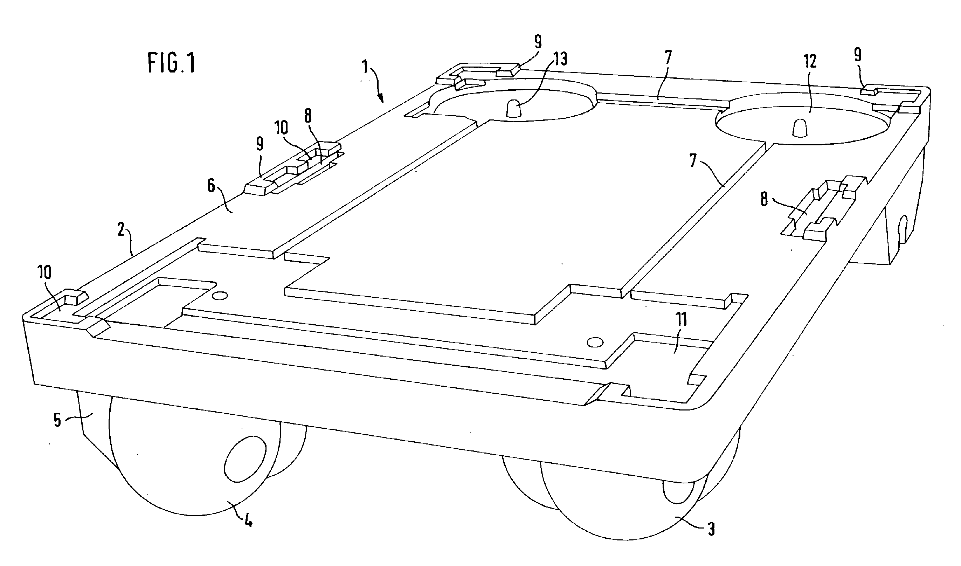

In Figur 1 ist ein Ausführungsbeispiel eines erfindungsgemäßen Transportrollers 1 in perspektivischer Darstellung gezeigt. Der Transportroller 1 besteht aus einer Plattform 2 mit einer multifunktionalen Transportfläche 6 und vier an der Unterseite der Plattform 2 angeordneten Rädern 3. Zwei der Räder 3 sind über den Lagerbock 5 starr an der Plattform 2 angeordnet, während zwei Räder 3 mit der Radachse drehbar bezüglich der Plattform 2 angeordnet sind.

Die Räder 3 bestehen jeweils aus einem Lagerbock 5 und einer Rolle 4, die in dem Lagerbock 5 drehbar aufgenommen ist. Der Lagerbock 5 dient neben der Aufnahme der Rollen 4 zur Anordnung der Räder 3 an der Plattform 2.

Die multifunktionale Transportfläche 6 weist verschiedenste Funktionselemente 7 bis 12 auf, die zu einer sicheren Aufnahme und Stapelung von Transportgut oder der Transportroller selbst dienen.

So ist am Umfang der Transportfläche 6 ein Stapelrand 9 vorgesehen, der als umlaufende Erhöhung aus der Transportfläche 6 heraus ausgebildet ist. Insbesondere ist der Stapelrand 9 jedoch nur abschnittsweise an den Seiten und den Eckbereichen der Plattform 2 vorgesehen.

Darüber hinaus weist die Transportfläche 6 vorzugsweise parallel zu den Seiten der Plattform 2 verlaufende Nuten 7 auf, in die Behälter unterschiedlicher Abmessungen eingreifen können.

Des weiteren sind Schlitze 8 vorgesehen, die entweder als Vertiefung in der Transportfläche 6 oder als durchgehende Öffnung durch die Plattform 2 ausgebildet sein können. Die Schlitze 8 dienen ebenfalls zur Aufnahme von Befestigungselementen der zu transportierenden Güter, wie z.B. Befestigungslaschen oder dergleichen.

Des weiteren sind unterschiedliche Vertiefungen 10 insbesondere in den Eckbereichen der Plattform 2 vorgesehen, die ebenfalls zur Sicherung gegen Verrutschen von zu transportierendem Gut dienen, z.B. durch die Aufnahme von Füßen oder Fußansätzen.

Darüber hinaus weist die Transportfläche 6 im gezeigten Ausführungsbeispiel zwei Vertiefungen 11 mit einer rechteckigen Grundfläche sowie zwei Vertiefungen 12 mit einer kreisförmigen Grundfläche auf, die zur Aufnahme der Räder 3 dienen, wenn mehrere Transportroller 1 z.B. zur Aufbewahrung oder beim Rücktransport von Leergut übereinander gestapelt werden. Die kreisrunden Vertiefungen 12 sind hierbei insbesondere zur Aufnahme der drehbar an der Plattform 2 angeordneten Räder 3 vorgesehen, so daß keine Ausrichtung der Räder 3 bezüglich der Vertiefungen 12 beim Aufeinanderstapeln der Transportroller 1 erfolgen muß. Bei der bevorzugten Ausführungsform von Rädern 3 mit Rollen 4, die eine Längsrille 22 aufweisen, ist es vorteilhaft, wenn die Vertiefung 12 in der Mitte einen Zentrierbolzen 13 aufweist, der in die Längsrille 22 der Rolle 4 eingreifen kann und somit dem Transportroller 1 in der Stapelposition eine gewisse Stabilität verleihen kann.

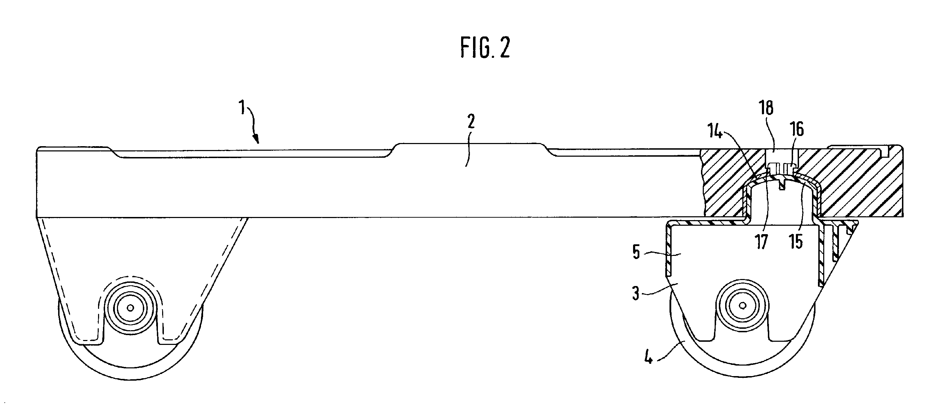

In Figur 2 ist eine Seitenansicht einer Ausführungsform des erfindungsgemäßen Transportrollers 1 dargestellt, bei der insbesondere die Anordnung eines Rades 3 durch eine teilweise Schnittansicht verdeutlicht ist. Die Schnittansicht zeigt, daß das Rad 3 über den Lagerbock 5 mit der Plattform 2 des Transportrollers 1 verbunden ist. Der Lagerbock 5 weist hierzu einen integral angeformten Lagerbockstutzen 15 auf, der in eine Lagerbockaufnahme 14 der Plattform 2 eingreifen kann. Bei der bevorzugten Ausführungsform der drehbaren Aufnahme des Lagerbocks 5 in der Plattform 2 ist der Lagerbockstutzen 15 im wesentlichen zylinderförmig ausgeführt, während die Lagerbockaufnahme 14 in Form einer Hülse ausgeführt ist, so daß sich der Lagerbockstutzen 15 in der Lagerbockaufnahme 14 drehen kann.

Um ein Ablösen des Rades 3 von der Plattform 2 zu verhindern, ist eine Rastverbindung zwischen Lagerbock 5 und Plattform 2 vorgesehen, die aus Rasthaken 16, die vorzugsweise am Lagerbock 5 angeordnet sind, und einer Rastfläche 17 besteht, so daß die Rasthaken 16 mit der Rastfläche 17 verrasten können. Die Rasthaken 16 sind dabei so elastisch ausgeführt, daß ein beschädigungsfreies Anbringen und Entfernen des Rades 3 bzw. des Radbocks 5 möglich ist. Dazu ist in der Plattform 2 eine Entriegelungsöffnung 18 vörgesehen, die oberhalb der Lagerbockaufnahme 14 angeordnet ist, so daß über die Entriegelungsöffnung 18 die Rasthaken 16 elastisch so verformt werden können, daß ein Entfernen des Rades 3 möglich ist.

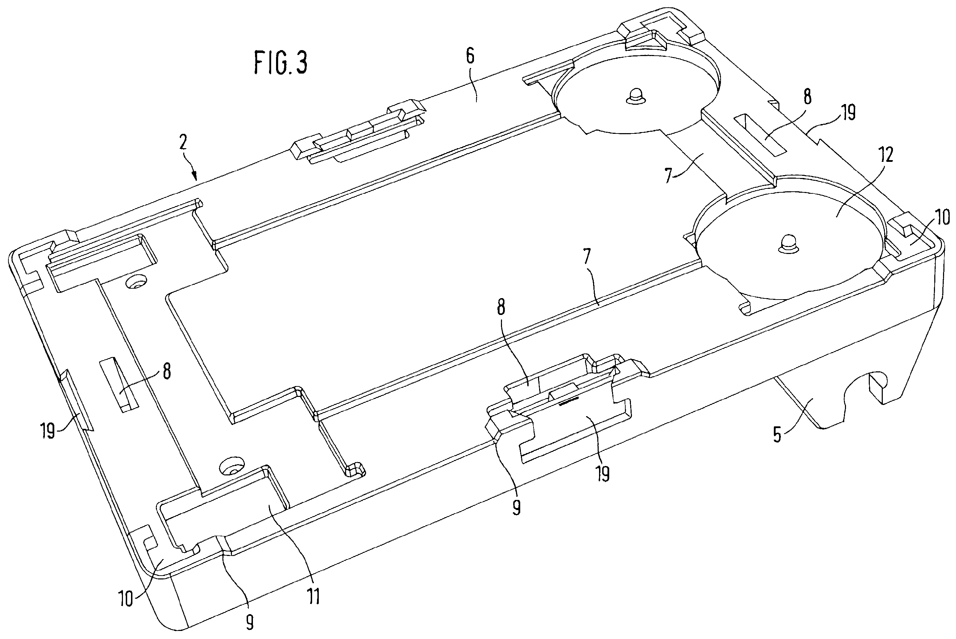

In Figur 3 ist eine perspektivische Ansicht der Plattform 2 von oben dargestellt, die die verschiedenen Funktionselemente 7 bis 12, 19 der Transportfläche 6 zeigt. Neben den bereits vorher beschriebenen Funktionselementen wie Nuten 7, Schlitze 8, Stapelrand 9, Vertiefungen 10, 11 und 12 sind bei dieser Ausführungsform zusätzlich in den Seitenwandbereichen der Plattform 2 Schwalbenschwanzführungen 19 vorgesehen, in die von der Transportfläche 6 Befestigungselemente der zu transportierenden Güter, wie z.B. Befestigungslaschen usw., eingeführt werden können. Durch einen trapezförmigen Querschnitt der Schwalbenschwanzführungen 19 ist es insbesondere möglich, Befestigungslaschen von Verpackungs- oder Verkaufskartons in die Schwalbenschwanzführungen 19 einzudrücken. Durch die T-förmige Ausbildung der Schwalbenschwanzführungen 19 ist ein Ablösen eines mit einem entsprechenden Befestigungsmittel in der Schwalbenschwanzführung 19 befestigten Gutes von der Transportfläche 6 nicht möglich. Auf diese Weise ist es insbesondere möglich, den erfindungsgemäßen Transportroller 1 auch zu Präsentationszwecken im Verkaufsraum zu verwenden, da durch die vielfältigen Funktionselemente der Transportfläche 6 eine sichere Befestigung eines Display- oder Verkaufskarton oder ähnliches möglich ist.

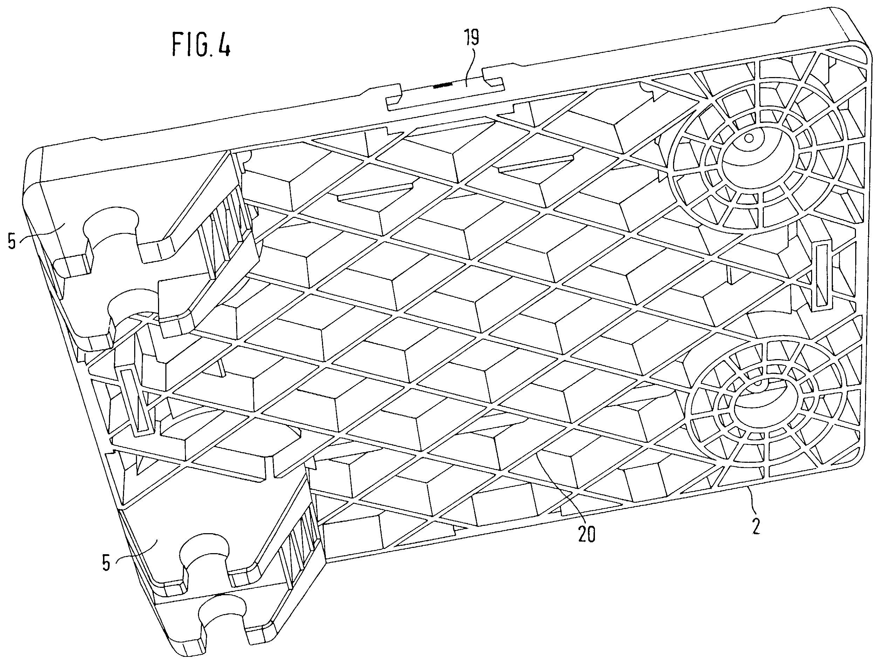

Figur 4 zeigt eine perspektivische Darstellung einer erfindungsgemäßen Plattform 2 von unten, bei der insbesondere die integrale Ausbildung von zwei Lagerböcken 5 sowie die Ausbildung der Plattform 2 mit einer Wabenstruktur 20 zu sehen ist. Durch die Ausbildung der Plattform 2 in einer Wabenstruktur 20 wird insbesondere der Vorteil erzielt, daß das Gewicht der Plattform 2 und somit des Transportrollers 1 bei ausreichender Stabilität stark verringert werden kann. Außerdem bildet eine derartige Wabenstruktur 2 den Vorteil, daß eine Kombination mit den Multifunktionselementen der Transportfläche 6 möglich ist, so daß zur leichteren Herstellung Vertiefungen oder durchgehende Schlitze 8 bei der Plattform 2 durch Aussparungen in der Wabenstruktur 20 realisiert werden können.

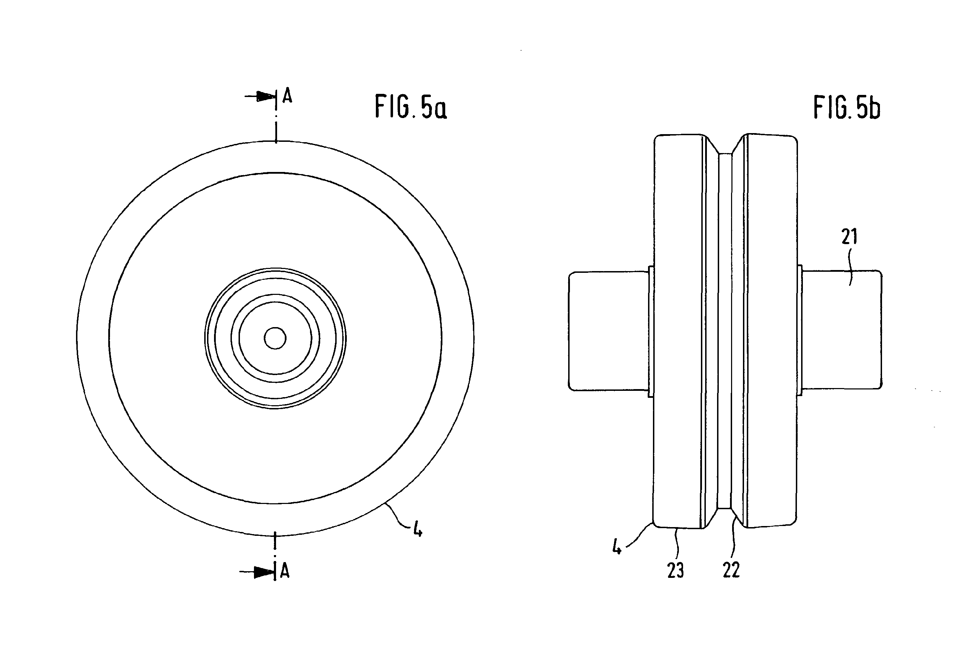

Figur 5 zeigt in den Teilfiguren a und b die Seitenansicht und die Frontansicht einer Rolle 4 eines Rades 3 eines erfindungsgemäßen Transportrollers 1. Die Rolle 4 weist eine Laufrille 22 auf, die vorzugsweise als V-förmige Vertiefung entlang der Lauffläche 23 der Rolle 4 angeordnet ist. Des weiteren weist die Rolle 4 integral eine Nabe 21 in Form eines über die Lauffläche 23 hervorstehenden Bolzens auf.

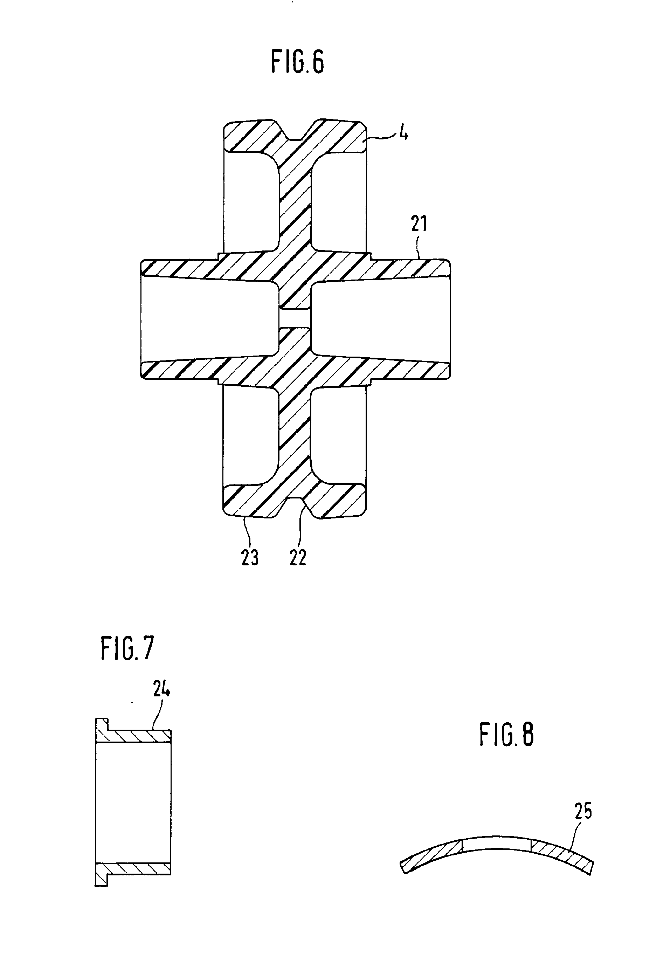

Die Figur 6 zeigt eine Schnittansicht entlang der Schnittlinie A aus Figur 5a. Hierbei ist die innere Struktur der Rolle 4 zu erkennen, insbesondere die Ausgestaltung der Nabe 21 als Hohlwelle und die im wesentlichem T-förmige Anordnung der Lauffläche 23 auf der Nabe 21.

Die Figuren 7 und 8 zeigen jeweils eine Schnittansicht durch eine Lagerbuchse 24 und eine Lagerscheibe 25, wobei die Lagerbuchse 24 zur Anordnung der Rolle 4 im Lagerbock 5 verwendet wird, während die Lagerscheibe 25 zur Anordnung zwischen Lagerbock 5 bzw. Lagerbockstutzen 15 und Plattform 2 bzw. Lagerbockaufnahme 14 vorgesehen ist.

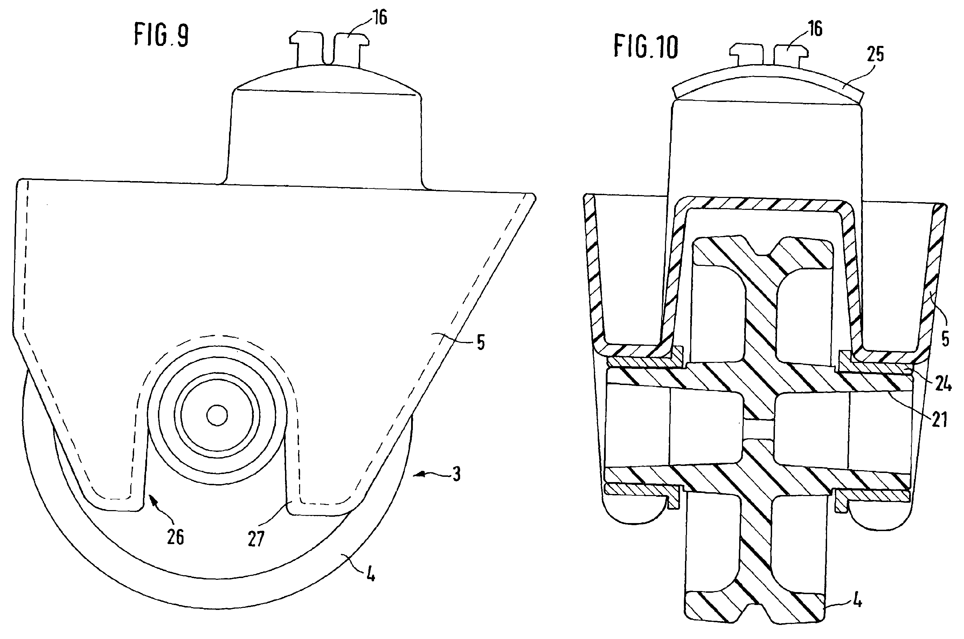

Die Figuren 9 und 10 zeigen den Zusammenbau eines Rades 3 aus Lagerbock 5, Rolle 4 und Lagerbuchse 24. Darüber hinaus zeigt Figur 10 die Anordnung der Lagerscheibe 25. Wie insbesondere in Figur 10 zu sehen ist, wird die Lagerbuchse 24 auf die Nabe 21 geschoben und befindet sich dann im endgültig montierten Zustand der Rolle 4 im Lagerbock 5 zwischen Lagerbock 5 und Nabe 21 der Rolle 4. Die Rolle 4 wird bei dem gezeigten Ausführungsbeispiel mit der Nabe 21 und Lagerbuchse 24 in einer im wesentlichen U-förmigen Aussparung 26 im Lagerbock 5 durch einen Klemmsitz gehalten. Die Klemmung wird hierbei dadurch erreicht, daß die U-förmige Aussparung 26 im Scheitel etwas größer dimensioniert ist als im Bereich der Schenkel 27, so daß die Lagerbuchse 24 mit der Nabe 21 durch die elastisch verformbaren Schenkel 27 des Lagerbocks 5 gehalten wird.

## Patentansprüche

1. Transportroller zum Transport und zur Lagerung von Kisten, Getränkekästen, Verpackungs- und Displaykartons und dergleichen mit einer Plattform (2) mit Transportfläche (6) und auf der Unterseite der Plattform (2) angeordneten Rädern (3), **dadurch gekennzeichnet, daß** die Plattform (2) und die Räder (3) im wesentlichen vollständig aus Kunststoff gefertigt sind.

2. Transportroller zum Transport und zur Lagerung von Kisten, Getränkekästen, Verpackungs- und Displaykartons und dergleichen, mit einer Plattform (2) mit Transportfläche (6) und unterhalb der Plattform (2) angeordneten Rädern (3), **dadurch gekennzeichnet, daß** die Transportfläche mit einer Vielzahl von Befestigungs- und Anordnungselementen (7, 8, 9, 10, 11, 12, 19) zur variablen Aufnahme einer Vielzahl unterschiedlicher Kisten, Kästen, Kartons und dergleichen multifunktional gestaltet ist.
